# EUROPEAN PATENT APPLICATION

(11) **EP 4 438 979 A1**
(43) Date of publication of application: **02.10.2024**
(21) Application number: 23165155.5
(22) Date of filing: 29.03.2023
(51) Int. Cl.: F25B 41/345, F16K 31/06, F16K 49/00

(54) **EXPANSION VALVE**

(71) Applicant: Siemens Schweiz AG, 8047 Zürich (CH)
(72) Inventor: Bork, Richard, 6006 Luzern (CH); Ernstberger, Pascal, 76437 Rastatt (DE); Kunzmann, Rolf, 76593 Gernsbach (DE); Sindermann, Katrin, 76137 Karlsruhe (DE); Wang, Siyuan, 76437 Rastatt (DE)
(74) Representative: Siemens Patent Attorneys

(57) **Abstract**

A valve (1) comprising: a first port (3), a second port (4), a valve member (5a; 5b) situated in a fluid path between the first port (3) and the second port (4), the valve member (5a; 5b) being selectively moveable between a closed position, which closes the fluid path between the first port (3) and the second port (4), and an open position, which opens the fluid path between the first port (3) and the second port (4); a solenoid (9a, 9b; 9c) and an armature (7a; 7b) coupled to the valve member (5a; 5b) and having a surface; and wherein a portion of the surface of the armature (7a; 7b) directly faces the solenoid (9a, 9b; 9c), wherein at least one coil of the plurality of coils is directly exposed to the refrigerant and is insulated with polyamide-imide.

## Description

### Background

The present disclosure relates to a valve such as an expansion valve. More specifically, the instant disclosure focuses on an electric and/or electronic expansion valve. An expansion valve according to the instant disclosure may advantageously be employed in an apparatus or system for heating, refrigeration, and/or air-conditioning.

Systems for heating, cooling, refrigeration, ventilation, and/or air-conditioning commonly harness a vapour-compression refrigeration circuit. The circuit has a compressor, a condenser, an expansion valve, and an evaporator. An expansion valve is often arranged in between the condenser and the evaporator. The expansion valve in such an arrangement controls an amount of refrigerant released into the evaporator.

A German patent application DE102014218525A1 was filed on 16 September 2014. The application DE102014218525A1 was published on 31 March 2016. DE102014218525A1 deals with an electronic control valve for an air conditioning compressor.

FIG 1 of the patent application DE102014218525A1 shows a control valve 100 having a solenoid 102. The solenoid envelopes an armature, the armature being connected to a stem 106. A pair of leads connects to the solenoid 102 and supplies the solenoid 102 with an electric current. The solenoid 102 and the armature seem to be arranged in a sealed enclosure.

A German patent application DE10058441A1 was filed on 24 November 2000. The application was published on 31 May 2001. DE10058441A1 deals with a motor driven valve. The motor driven valve of DE10058441A1 is provided with a brushless servomotor having a rotor inside a magnetically transparent casing. The motor driven valve of DE10058441A1 is also provided with a stator located outside the casing and comprising drive coils and Hall effect units.

DE10058441A1 discloses in column 1, lines 57 to 64, that certain valve applications that require only low torque employ stepper motors to inhibit leakage. The stepper motors are entirely mounted within the valve housing. A rod, a seal as well as an associated leak potential are thereby eliminated. This, however, exposes the rotor, the windings, and the associated wiring to liquids.

A US patent US6390782B1 was granted on 21 May 2002. An application 09/527,142 for the same patent was filed on 21 March 2000. US6390782B1 deals with a control valve for a variable displacement compressor.

US6390782B1 in FIG 8b shows a reference gas chamber 90 of a control valve. A housing is shown with a solenoid actuator 92 and a leaf spring 178 arranged inside the housing. An electric current is applied to the solenoid actuator 92 via a pair of leads 87. An armature appears to be arranged in the centre of the housing. The armature connects to a stem 177 acting on a valve member 170, 172.

A patent application EP0102076A1 was filed by HONEYWELL INC, US on 27 August 1983. The application was published on 7 March 1984. EP0102076A1 deals with a gas valve.

A patent application EP3064811A1 was filed by GREE ELECTRIC APPLIANCES INC, CN on 17 October 2014. The application was published on 7 September 2016. EP3064811A1 deals with an electronic expansion valve.

The present disclosure discloses an expansion valve that affords effective cooling of the windings of the valve. The electronic expansion valve according to the instant disclosure also is resilient.

### Summary

The valve according to the instant disclosure comprises a solenoid, an armature, a stem, a resilient member, and a valve member all arranged in the same enclosure. A stem couples the actuator and the valve member. The actuator can be a linear actuator.

One or more coils of the solenoid of the valve are directly exposed to a refrigerant. Since the one or more coils are not shielded from the refrigerant via a separate compartment, adequate insulation is required. It has been found that insulation made of polyamide-imide not only provides long-term electric insulation. Insulation made of polyamide-imide also affords a solenoid that endures the thermal stresses caused by its direct exposure to the refrigerant. What's more, insulation made of polyamide-imide offers resistance to chemical attack via the refrigerant.

The valve as disclosed herein leverages the relatively moderate requirements of electronic expansion valves in terms of torque and/or force. Yet, the actuator of an electronic expansion valve shall achieve high speeds such that the valve may quickly respond to critical conditions. The actuator may be a linear actuator formed by the solenoid and the armature. The linear actuator is self-contained and minimizes numbers of moving parts. Further, the linear actuator exhibits similar behaviours extending and retracting.

No magnetically transparent can is arranged in between the solenoid and the armature. The solenoid is arranged just outside or inside the armature, thereby minimizing any magnetic gap between the solenoid and the armature. Also, a missing magnetic can affords a compact valve. In addition, no member arranged in between the solenoid and the armature adversely impacts on a magnetic flux between the solenoid and the armature. The absence of a can allows the position of the valve to be precisely controlled by an electric current through the solenoid.

The valve also advantageously inhibits overheating of components of the valve. More specially, any overheating of the solenoid is inhibited. To that end, at least a portion of the solenoid is in direct contact with a refrigerant flowing through the valve. In an embodiment, the solenoid comprises a plurality of coils and each coil of the solenoid is directly exposed to the refrigerant flowing through the valve. In another embodiment, at least one coil of the solenoid is directly exposed to the refrigerant flowing through the valve.

As disclosed herein in at least one embodiment, the expansion valve is suitable for vapour-refrigeration circuits.

As disclosed in further detail herein, a valve consistent with at least one embodiment, may include a resilient member that provides a maximum urge for the valve member to return to its normally closed position. To that end, the resilient member may comprise a leaf spring and/or a plate spring. The valve immediately and directly returns to a normally closed position in the event of a power failure.

A valve consistent with at least one embodiment disclosed herein is also suitable to be used as a safety valve.

As further disclosed herein, a valve is provided for the modulating control of a fluid flowing through the valve.

A valve as disclosed in at least one embodiment has a structure to inhibit mechanical wear. To that end, the resilient member of the normally closed valve described herein comprises an armature. The armature can comprise a permanent magnet such as a ferromagnet. The armature can also be not permanently magnetic.

Where minimum mechanical wear and maximum safety are both desired, the permanent magnet may comprise a neodymium magnet. In a specific embodiment, the neodymium magnet comprises a NdFeB magnet selected from at least one of a
sintered Nd₂Fe₁₄B magnet, or a
bonded Nd₂Fe₁₄B magnet.

In an alternate embodiment, the permanent magnet comprises a samarium-cobalt SmCo magnet selected from at least one of a
sintered SmCos magnet, or a
sintered Sm(Co, Fe, Cu, Zr)₇ magnet.

### Brief description of the drawings

Various features will become apparent to those skilled in the art from the following detailed description of the disclosed non-limiting embodiments. The drawings that accompany the detailed description can be briefly described as follows:
FIG 1 is a schematic of a valve in which various embodiments are implemented.
FIG 2 depicts the valve in accordance with at least one embodiment with a pair of leads connecting to a solenoid.
FIG 3 shows the valve in accordance with at least one embodiment having a cup-shaped valve member.
FIG 4 is a schematic of the valve in accordance with at least one embodiment employing a stack of plate discs as a resilient member.
FIG 5 depicts the valve in accordance with at least one embodiment wherein a pair of magnets forms the resilient member.
FIG 6 shows the valve in accordance with at least one embodiment wherein a housing of the valve comprises a first chamber and a second chamber, the first chamber being in fluid communication with the second chamber.
FIG 7 illustrates a valve in accordance with at least one embodiment having a guide member.
FIG 8 schematically shows a valve having a solenoid inside the armature.
FIG 9 depicts a valve having a dynamic seal.
FIG 10 depicts a valve having a cup-shaped valve member and a dynamic seal.

### Detailed description

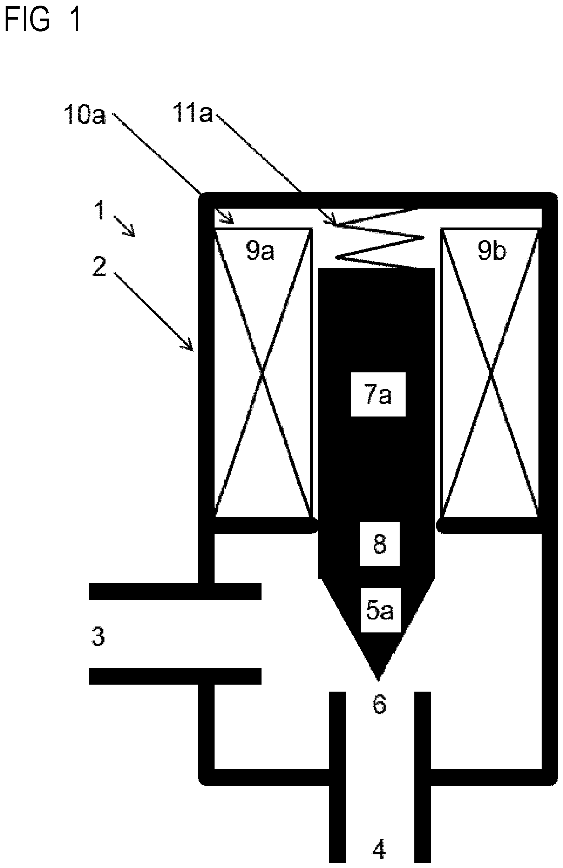

FIG 1 shows the various components of a valve 1 of the instant disclosure. The valve 1 advantageously is or comprises an expansion valve. Yet more advantageously the valve 1 is or comprises an electronic expansion valve. The valve 1 may be installed in a refrigeration-vapour circuit. The valve 1 in accordance with at least one embodiment is advantageously part of a refrigeration-vapour circuit.

The valve 1 comprises a housing 2. The valve housing 2 has sides defining a first port 3 and a second port 4. In an embodiment, the first port 3 comprises a first conduit. It is also envisaged that the second port 4 comprises a second conduit. According to an aspect of the instant disclosure, the first port 3 is an inlet port and the second port 4 is an outlet port 4. According to another aspect of the instant disclosure, the first port 3 is an outlet port and the second port 4 is an inlet port.

The first port 3 and the second port 4 are in fluid communication with each other to afford flow of a fluid through the valve 1. In a preferred embodiment, the fluid comprises a refrigerant. The fluid may, by way of non-limiting example, be a R32, R401A, R404A, R406A, R407A, R407C, R408A, R409A, R410A, R438A, R500, or a R502 refrigerant. The fluid at the inlet port advantageously is a liquid. The fluid at the outlet port preferably is a two-phase fluid.

A fluid path extends between the first port 3 and the second port 4. A valve member 5a is situated in the fluid path. The valve member 5a is moveable. The valve member 5a cooperates with a valve seat 6. The valve member 5a thereby varies and limits a flow rate of the fluid through the valve 1.

It is envisaged that a valve body is or comprises the housing 2. In an embodiment, the housing 2 comprises a metallic material such as steel, especially austenitic (stainless) steel and/or ferrite steel. In an alternate embodiment, the housing 2 comprises aluminum (alloy) or gunmetal or brass. In yet another alternate embodiment, the housing 2 comprises a polymeric material. According to an aspect, the housing 2 is manufactured using an additive manufacturing technique such as three-dimensional printing. Manufacture of the housing 2 can, in a specific embodiment, involve selective laser sintering. It is still envisaged that the housing 2 comprises a grey cast material and/or of nodular cast iron.

Manufacture of the housing 2 can also involve investment casting.

According to an aspect of the present disclosure, a fluid conduit in between the first port 3 and the second port 4 is or comprises a polymeric member. Manufacture of the fluid conduit and/or of the first port 3 and/or of the second port 4 can involve additive manufacturing such as three-dimensional printing. Manufacture of the fluid conduit and/or of the first port 3 and/or of the second port 4 can also involve selective laser sintering.

FIG 1 shows the valve seat 6 as part of the second port 4. A skilled person having reviewed the embodiments disclosed herein may understand that the first port 3 may also comprise the valve seat 6. The skilled person also understands that the valve seat 6 may be separate from the first port 3 and may be separate from the second port 4.

In the embodiment shown in FIG 1, the valve member 5a is linearly moveable by linear movement of the armature 7a. The armature 7a may mechanically connect to the valve member 5a via a stem 8. It is also envisaged that the armature 7a directly connects to the valve member 5a.

According to an aspect of the present disclosure, the armature 7a, the stem 8, and the valve member 5a form a single piece. That is, the stem 8 and the valve member 5a are both integral parts of the armature 7a. Likewise, the armature 7a and the steam 8 are integral with the valve member 5a.

According to another aspect of the present disclosure, the valve member 5a is configured to rotate to some extent with respect to the armature 7a. The valve member 5a preferably rotates about an axis connecting the armature 7a, the valve member 5a, and/or the stem 8. In an embodiment, the valve member 5a is allowed to rotate by an articulation angle of 0.1 degrees or of 0.2 degrees or even of 0.5 degrees. A limited amount of articulation of the valve member 5a with respect to the armature 7a improves on the alignment of the arrangement.

At least a portion of the armature 7a may be surrounded by a solenoid 9a, 9b. Upon application of an electric current, the solenoid 9a, 9b produces a magnetic flux. This magnetic flux acts on the armature 7a thereby displacing the armature 7a.

A can need not envelope the armature 7a and/or the stem 8. That is, the armature 7a has an outer surface. In an embodiment, a portion of the outer surface of the armature 7a directly faces the solenoid 9a, 9b. In another embodiment, the outer surface of the armature 7a directly faces the solenoid 9a, 9b. Likewise, the solenoid 9a, 9b has an outer surface. In an embodiment, a portion of the outer surface of the solenoid 9a, 9b directly faces the armature 7a. In another embodiment, the outer surface of the solenoid 9a, 9b directly faces the armature 7a.

The solenoid 9a, 9b and the armature 7a are arranged in the same chamber 10a inside the housing 2. The chamber 10a is ideally filled with a liquid fluid. The liquid fluid inside the chamber 10a may, by way of non-limiting example, be a R-401A, R-404A, R-406A, R-407A, R-407C, R-408A, R-409A, R-410A, R-438A, R-500, or a R-502 refrigerant.

This liquid fluid is in direct contact with the outer surface of the portion of the armature 7a that is inside the chamber 10a. The liquid fluid also is in direct contact with the solenoid 9a, 9b.

According to an aspect of the instant disclosure, the solenoid 9a, 9b comprises a plurality of coils. It is envisaged that at least one coil or at least two coils or at least five coils of the solenoid 9a, 9b are directly exposed to the liquid in the chamber 10a. In a specific embodiment, all the coils of the solenoid 9a, 9b are directly exposed to the liquid. The solenoid 9a, 9b preferably comprises a helical solenoid.

The one or more coils are insulated using polyamide-imide. It has been found that insulations made of polyamide-imide protect the one or more coils from thermal, electric, ambient, and mechanic stresses.

According to an aspect of the present disclosure, the one or more coils each comprise a copper wire. The copper wires are insulated using polyamide-imide. It has been found that insulations made of polyamide-imide protect copper wires from thermal, electric, ambient, and mechanic stresses.

According to another aspect of the present disclosure, the one or more coils each comprise an aluminum wire. The aluminum wires are insulated using polyamide-imide. It has been found that insulations made of polyamide-imide protect aluminum wires from thermal, electric, ambient, and mechanic stresses.

The one or more coils preferably each comprise a core. The core can be made of a material such as copper or an allow thereof. The core is then coated with at least one of
- a film comprising polyamide-imide,
- a layer comprising polyamide-imide.

According to a special aspect of the instant disclosure, the core is coated with at least one of
- a film consisting of polyamide-imide,
- a layer consisting of polyamide-imide.

The film preferably has a thickness of one hundred micrometers or less. The film ideally has a thickness of fifty micrometers or less. The layer preferably has a thickness of one hundred micrometers or less. The layer ideally has a thickness of fifty micrometers or less.

A resilient member 11a ensures that the valve 1 is a normally closed valve. The resilient member 11a couples to the armature 7a. In a specific embodiment, the resilient member 11a mechanically connects to the armature 7a.

The resilient member 11a urges the armature 7a and the valve member 5a to close the valve 1. To that end, the resilient member 11a urges the armature 7a and the valve member 5a toward the seat 6. In a specific embodiment, the resilient member 11a urges the armature 7a, the stem 8, and the valve member 5a to close the valve 1. To that end, the resilient member 11a urges the armature 7a, the stem 8, and the valve member 5a toward the seat 6. The member 11a preferably urges these movable members 7a, 8, 5a toward the seat 6 until the valve member 5a engages the seat 6. The valve member 5a advantageously engages the seat 6 at a closed position.

According to an aspect, the resilient member 11a comprises a compression spring. In one embodiment, the resilient member 11a comprises a helical compression spring.

The skilled person understands that a tension spring can be attached to the second port 4 and to the stem 8. The tension spring then urges the stem 8 toward the second port 4.

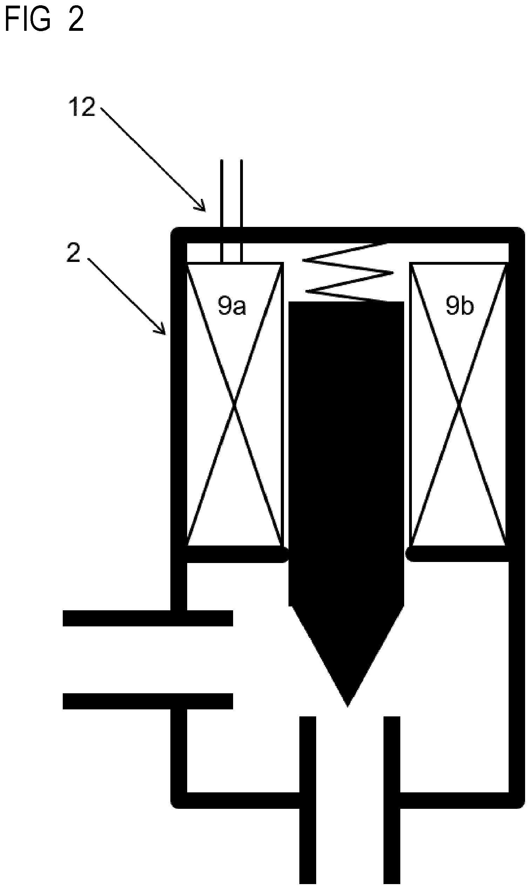

FIG 2 shows a pair of leads 12 that supplies the solenoid 9a, 9b with an electric current. To that end, the pair of leads 12 passes through the housing 2 of the valve 1. A gasket can be employed to envelope each lead of the pair 12 at the location where the leads 12 perforate the (wall of the) housing 2.

According to an aspect of the instant disclosure, a feed-through is employed to envelope each lead of the pair 12 at the location where the leads 12 perforate the (wall of the) housing 2. The feed-through advantageously hermetically seals the housing 2. The feed-through may be or comprise a glass feed-through.

In an embodiment, the pair of leads 12 supplies the solenoid 9a, 9b with a pulse-width modulated current. According to a related aspect, the pulse-width modulated current is a 400 Hertz pulse-width modulated current.

In an alternate embodiment, the pair of leads 12 connects to an inverter not shown on FIG 2. This inverter produces an electric current to be supplied to the solenoid 9a, 9b. The inverter ideally comprises a matrix converter having only a single stage of conversion.

In yet another embodiment, the pair of leads 12 connects to a phase-controlled modulator. The phase-controlled modulator produces an electric current to be supplied to the solenoid 9a, 9b.

FIG 1 shows a valve 1 having a conical valve member 5a. In an embodiment, the conical valve member 5a comprises a metallic material such as steel, especially austenitic (stainless) steel and/or ferrite steel. In an alternate embodiment, the conical valve member 5a comprises aluminum (alloy) or gunmetal or brass. In yet another alternate embodiment, the conical valve member 5a comprises a polymeric material. According to an aspect, the conical valve member 5a is manufactured using an additive manufacturing technique such as three-dimensional printing. Manufacture of the conical valve member 5a can, in a specific embodiment, involve selective laser sintering. It is still envisaged that the conical valve member 5a comprises a grey cast material and/or of nodular cast iron.

Manufacture of the conical valve member 5a can also involve investment casting.

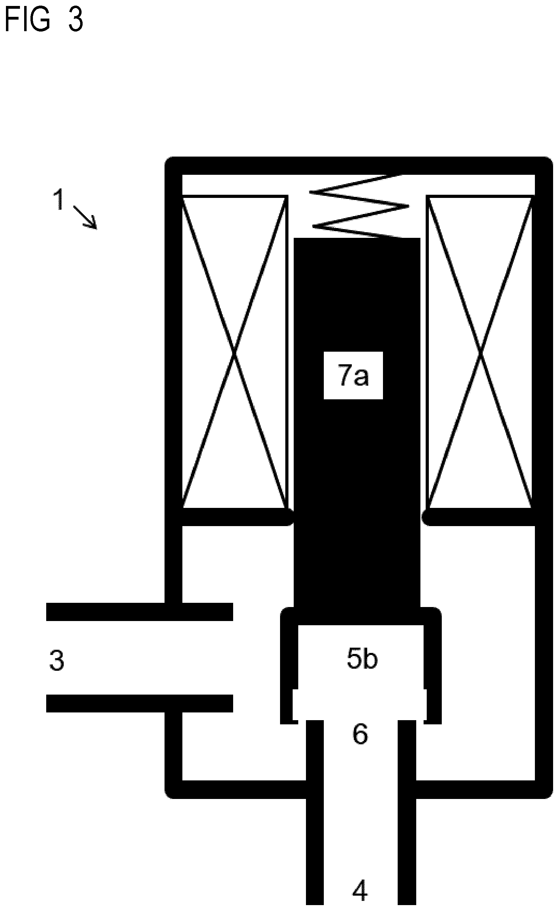

The valve member may also be a cup-shaped valve member 5b. FIG 3 shows a valve 1 having such a cup-shaped valve member 5b. In an embodiment, the cup-shaped valve member 5b comprises a metallic material such as steel, especially austenitic (stainless) steel and/or ferrite steel. In an alternate embodiment, the cup-shaped valve member 5b comprises aluminum (alloy) or gunmetal or brass. In yet another alternate embodiment, the cup-shaped valve member 5b comprises a polymeric material. According to an aspect, the cup-shaped valve member 5b is manufactured using an additive manufacturing technique such as three-dimensional printing. Manufacture of the cup-shaped valve member 5b may, in a specific embodiment, involve selective laser sintering. It is still envisaged that the cup-shaped valve member 5b comprises a grey cast material and/or of nodular cast iron.

Manufacture of the cup-shaped valve member 5b can also involve investment casting.

The valve member 5b is situated in the fluid path between the first port 3 and the second port 4. The cup-shaped valve member 5b is moveable. The valve member 5b cooperates with the valve seat 6 of the second port 4. The valve member 5b thereby varies and limits the flow rate of the fluid through the valve 1.

The valve member 5b cooperates with the valve seat 6 in that a cylindrical portion of the valve member 5b envelopes a portion of the seat 6. To that end, the valve member 5b provides a cup-shaped cylindrical portion extending toward the valve seat 6.

The cup-shaped valve member 5b is linearly moveable by linear movement of the armature 7a. The armature 7a may mechanically connect to the valve member 5b via a stem 8. It is also envisaged that the armature 7a directly connects to the valve member 5b.

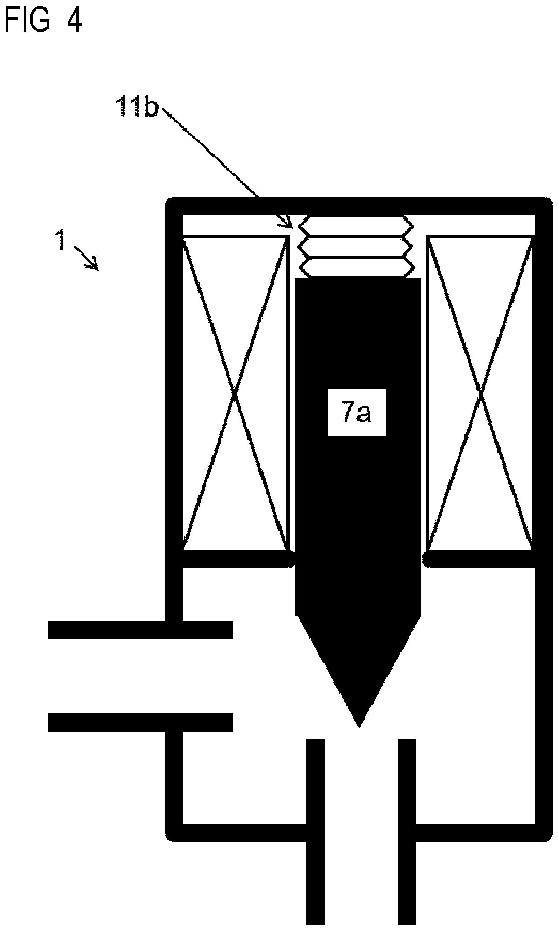

FIG 1 shows a resilient member 11a in the form of a helical spring. The resilient member may, by way of non-limiting example, also comprise at least one leaf spring and/or at least one disc spring. FIG 4 shows a resilient member 11b comprising at least one disc spring.

It is envisaged that the resilient member 11b comprises at least one disc spring or at least two disc springs or at least five disc springs. The resilient member 11b may comprise a stack of disc springs. Disc springs provide large energy densities and/or relative large forces. A valve 1 having a resilient member 11b in the form of at least one disc spring will instantly close in the event of a power failure.

The at least one disc spring 11b ensures that the valve 1 is a normally closed valve. The at least one disc spring 11b couples to the armature 7a. In a specific embodiment, the at least one disc spring 11b mechanically connects to the armature 7a.

The at least one disc spring 11b urges the armature 7a and the valve member 5a to close the valve 1. More specifically, the at least one disc spring 11b urges the armature 7a and the valve member 5a toward the seat 6. In a specific embodiment, the at least one disc spring 11b urges the armature 7a, the stem 8, and the valve member 5a to close the valve 1. More specifically, the at least one disc spring 11b urges the armature 7a, the stem 8, and the valve member 5a toward the seat 6. The at least one disc spring 11b preferably urges the movable members 7a, 8, 5a toward the seat 6 until the valve member 5a engages the seat 6. The valve member 5a advantageously engages the seat 6 at a closed position.

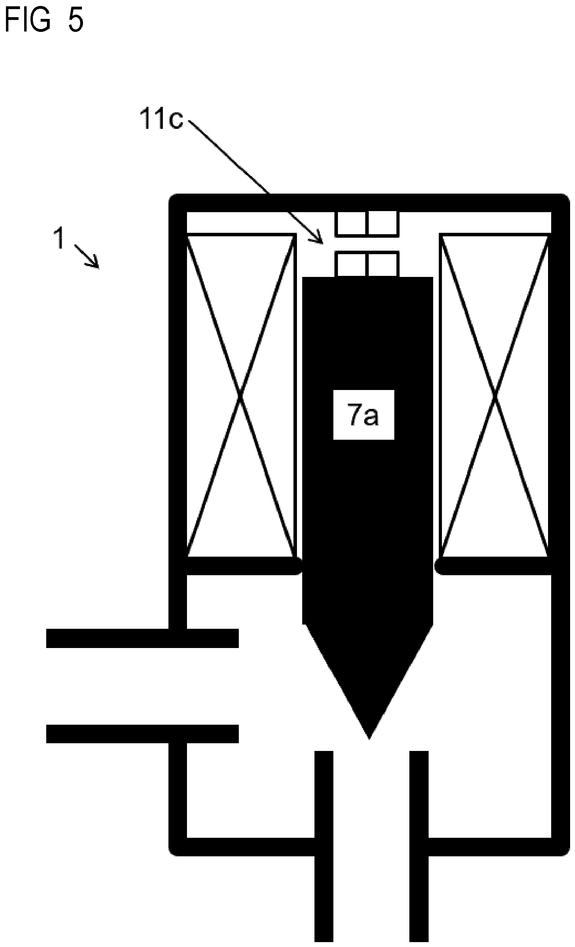

The resilient member may, by way of non-limiting example, also comprise a pair of permanent magnets. FIG 5 shows a resilient member 11c comprising a pair of permanent magnets. Valves 1 employing permanent magnets 11c instead of mechanical springs 11a, 11b afford minimum mechanical wear.

The pair of permanent magnets 11c ensures that the valve 1 is a normally closed valve. The pair of permanent magnets 11c couples to the armature 7a. In a specific embodiment, the pair of permanent magnets 11c mechanically connects to the armature 7a.

The pair of permanent magnets 11c urges the armature 7a and the valve member 5a to close the valve 1. To that end, the pair of permanent magnets 11c urges the armature 7a and the valve member 5a toward the seat 6. In a specific embodiment, the pair of permanent magnets 11c urges the armature 7a, the stem 8, and the valve member 5a to close the valve 1. More specifically, the pair of permanent magnets 11c urges the armature 7a, the stem 8, and the valve member 5a toward the seat 6. The pair of permanent magnets 11c preferably urges the movable members 7a, 8, 5a toward the seat 6 until the valve member 5a engages the seat 6. The valve member 5a advantageously engages the seat 6 at a closed position.

In a specific embodiment, the pair of permanent magnets comprises a neodymium NdFeB magnet selected from at least one of a
sintered Nd₂Fe₁₄B magnet, or a
bonded Nd₂Fe₁₄B magnet.

In an alternate embodiment, the pair of permanent magnets comprises a samarium-cobalt SmCo magnet selected from at least one of a
sintered SmCos magnet, or a
sintered Sm(Co, Fe, Cu, Zr)₇ magnet.

It is envisaged that a first magnet of the pair of permanent magnets 11c is coupled to or mounted to the inside of the housing 2. A second magnet of the pair of permanent magnets 11c may, by way of non-limiting example, be coupled to and/or be mounted to the armature 7a.

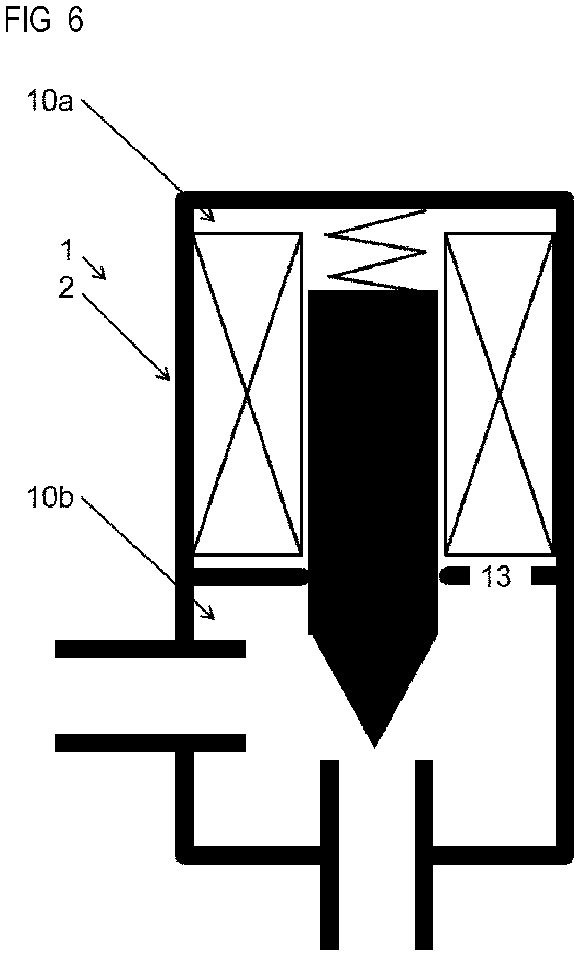

The refrigerant inside the fluid path may be employed to inhibit overheating of the solenoid 9a, 9b. FIG 6 shows a valve 1 having a first chamber 10a and a second chamber 10b arranged inside the housing 2. The first chamber 10a is in fluid communication with the second chamber 10b via an orifice 13 such as a through-hole. In a special embodiment, the through-hole 13 is or comprises a bore through a wall disposed between the chambers 10a and 10b that surrounds the armature 7a.

The chambers 10a and 10b are ideally filled with the same liquid fluid. The liquid fluid inside the chambers 10a, 10b may, by way of non-limiting example, be a R-401A, R-404A, R-406A, R-407A, R-407C, R-408A, R-409A, R-410A, R-438A, R-500, or a R-502 refrigerant.

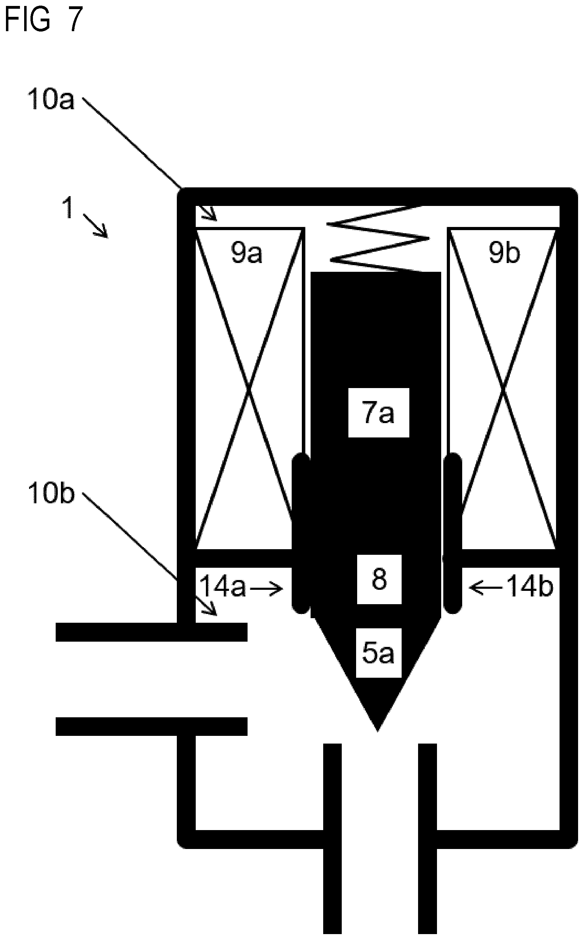

The valve 1 of the present disclosure may further comprise one or more guide members for the armature 7a and/or for the stem 8. A guide member 14a, 14b is shown in FIG 7. The guide member 14a, 14b is preferably arranged near an end of the chamber 10a. It is envisaged that the valve 1 comprises two guide members for the armature 7a and/or for the stem 8.

The guide member 14a, 14b is advantageously arranged where the armature 7a and/or the stem 8 passes from the first chamber 10a to the second chamber 10b. To that end, a wall separates the first chamber 10a from the second chamber 10b. The wall separating the two chambers 10a, 10b comprises an orifice. The armature 7a and/or the stem 8 may pass through this orifice. The guide member 14a, 14b is preferably arranged at the orifice between the two chambers 10a, 10b.

In an embodiment, the guide member 14a, 14b comprises a sleeve. The sleeve advantageously envelopes the armature 7a and/or the stem 8. It is also envisaged that the guide member 14a, 14b forms a slide bearing. It is envisaged that the bearing formed by the guide member 14a, 14b and/or by the sleeve is optimised for minimum friction and/or for minimum hysteresis.

It is envisaged that the guide member 14a, 14b affords a limited clearance. The two chambers 10a, 10b are thus in fluid communication by virtue of the clearance afforded by the guide member 14a, 14b. In an embodiment, a clearance is formed between the guide member 14a, 14b and the armature 7a and/or the stem 8. The maximum width of the clearance preferably is 40 micrometers or 100 micrometers or even 200 micrometers.

In another embodiment, the guide member 14a, 14b is a bore and/or a through-hole through the wall that separates the first chamber 10a from the second chamber 10b. It is also envisaged that the bearing formed by the bore and/or by the through-hole is optimised for minimum friction and/or for minimum hysteresis.

In yet another embodiment, the guide member comprises a cup-shaped member and/or a cage and/or a can 5b. It is also envisaged that the cup-shaped member and/or the cage and/or the can 5b forms a slide bearing. It is envisaged that the bearing formed by the cup-shaped member and/or the cage and/or the can 5b is optimised for minimum friction and/or for minimum hysteresis.

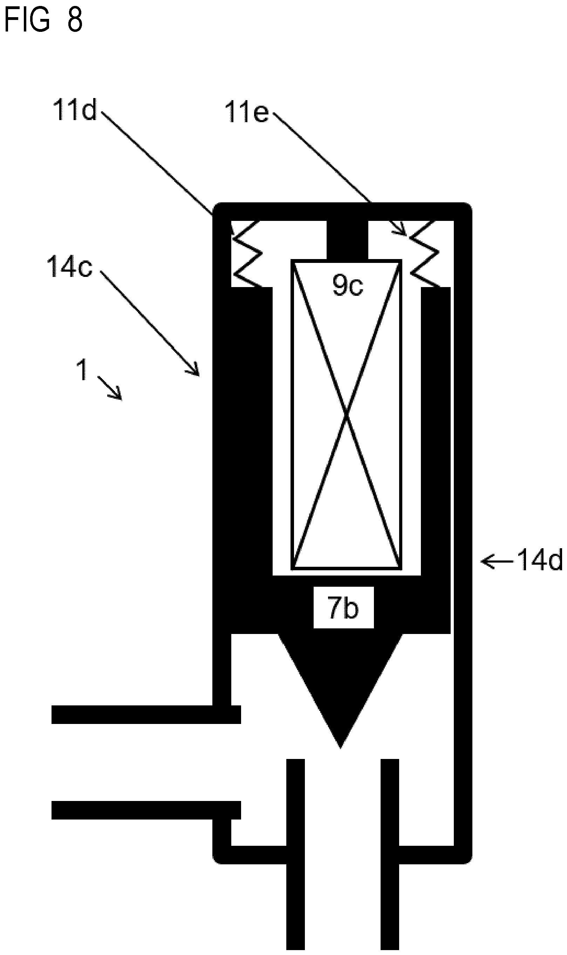

The solenoid 9a, 9b of the valve 1 disclosed herein needs not be arranged outside the armature 7a. The solenoid 9c may also be arranged inside the armature 7b. FIG 8 shows an armature 7b that envelopes a solenoid 9c. In this embodiment, the armature 7b has a surface that defines a slot in the armature 7b to receive the solenoid 9c. The sidewalls 14c, 14d of the housing 2 function as a guide member. The sidewalls 14c, 14d of the housing 2 advantageously form lateral walls of the housing 2.

It is envisaged that the sidewalls 14c, 14d of the housing 2 forms a slide bearing. It is further envisaged that the bearing formed by the sidewalls 14c, 14d is optimised for minimum friction and/or for minimum hysteresis.

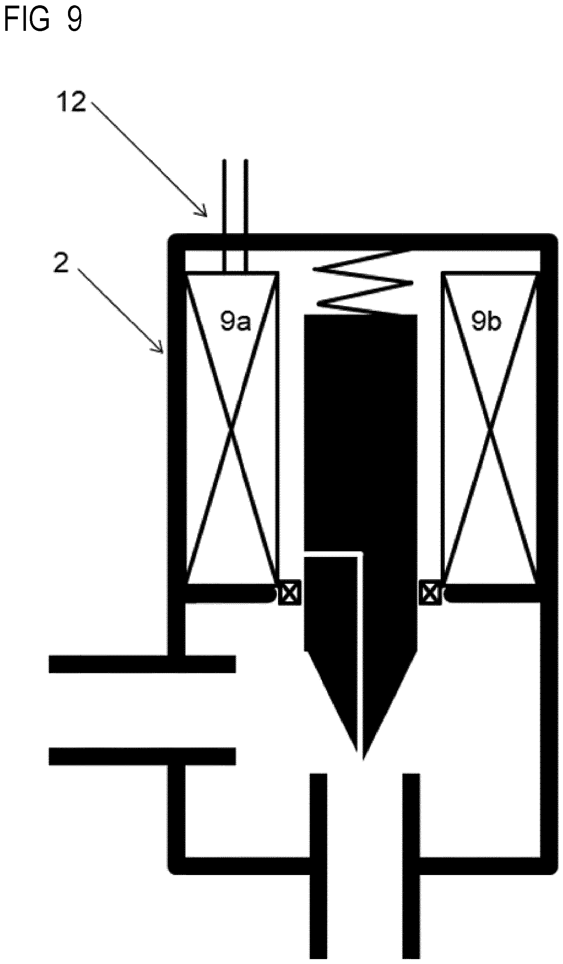

A dynamic seal is shown in FIG 9. It is envisaged that a guide member 14a, 14b as shown in FIG 7 comprises a dynamic seal. The dynamic seal preferably envelopes the armature 7a and/or the stem 8.

The valve 1 preferably comprises at least one guide member 14a - 14d. The valve 1 can also comprise a plurality of guide members 14a - 14d. A plurality of guide members 14a - 14d precisely aligns the moving parts and the fixed parts of the valve 1.

Also, the orifice 13 as shown in FIG 6 can be replaced by a conduit perforating the armature 7a and/or the stem 8 and/or the valve member 5a. The conduit connects the first chamber 10a and the second chamber 10b. The conduit through the armature 7a and/or through the stem 8 and/or the valve member 5a affords fluid communication between the two chambers 10a, 10b.

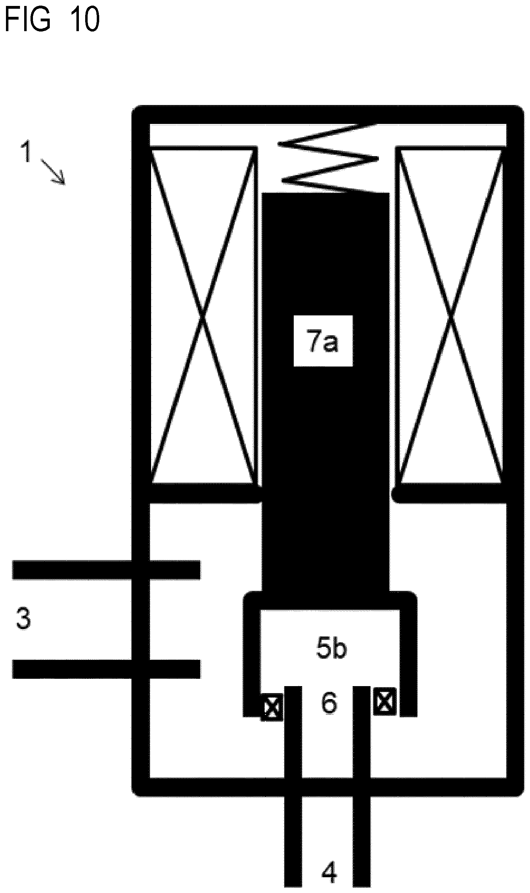

In the embodiment shown in FIG 10, the cup-shaped valve member 5b comprises a dynamic seal. The dynamic seal envelopes the second port 4 and/or the valve seat 6. In an alternate embodiment, the second port 4 comprises the dynamic seal.

The teachings of the instant disclosure apply to two-way valves as well as to three-way valves.

As described in detail herein, the present disclosure discloses a valve (1) comprising:
a first port (3), a second port (4), and a fluid path extending between the first port (3) and the second port (4);
a valve member (5a; 5b) situated in the fluid path between the first port (3) and the second port (4), the valve member (5a; 5b) being selectively moveable between a closed position, which closes the fluid path between the first port (3) and the second port (4), and an open position, which opens the fluid path such that a refrigerant can flow between the first port (3) and the second port (4);
an armature (7a; 7b) coupled to the valve member (5a; 5b) and having a surface and a solenoid (9a, 9b; 9c);
wherein a portion of the surface of the armature (7a; 7b) directly faces the solenoid (9a, 9b; 9c);
wherein the solenoid (9a, 9b; 9c) comprises a plurality of coils; and
wherein at least one coil of the plurality of coils is directly exposed to the refrigerant and is insulated with polyamide-imide.

In an embodiment, the solenoid (9a, 9b; 9c) and the armature (7a; 7b) form a linear actuator. In another embodiment, a stepper motor is employed. That is, the actuator is not linear.

The solenoid (9a, 9b; 9c) comprises a plurality of coils; and
the at least one coil of the plurality of coils is directly exposed to the refrigerant and is insulated with polyamide-imide.

It is envisaged that the at least one coil of the plurality of coils is covered with at least one of
- a film comprising polyamide-imide,
- a layer comprising polyamide-imide.

In an embodiment, the at least one coil of the plurality of coils is covered with at least one of
- a film consisting of polyamide-imide,
- a layer consisting of polyamide-imide.

The at least one coil of the plurality of coils preferably has a core made of at least one of
- copper,
- an alloy comprising copper.

In an embodiment, the at least one coil of the plurality of coils preferably has a core made of at least one of
- aluminum,
- an alloy comprising aluminum.

The valve (1) advantageously is a pressure-compensated valve and/or a pressure-balanced valve. Pressure-compensated valves afford large pressure differences between the first port (3) and the second port (4). Also, a pressure-balanced valve for any given pressure difference employs a small linear actuator compared to an unbalanced valve.

In an embodiment, the valve (1) is or comprises an expansion valve. In a specific embodiment, the valve (1) is or comprises an electronic expansion valve.

The solenoid (9a, 9b; 9c) preferably is or comprises an electromagnetic solenoid. The armature (7a; 7b) preferably is or comprises a magnetic armature.

The surface of the armature (7a; 7b) comprises a portion. The portion of the surface of the armature (7a; 7b) may, by way of non-limiting examples, cover half the surface of the armature (7a; 7b), three quarters of the surface of the armature (7a; 7b), or even ninety percent of the surface of the armature (7a; 7b).

The solenoid (9a, 9b; 9c) advantageously comprises a plurality of coils. The portion of the surface of the armature (7a; 7b) directly faces at least one coil of the plurality of coils. In a specific embodiment, the portion of the surface of the armature (7a; 7b) directly faces the plurality of coils of the solenoid (9a, 9b; 9c).

The portion of the surface of the armature (7a; 7b) directly faces the solenoid (9a, 9b; 9c) such that no can and no wall of a can is situated in between the armature (7a; 7b) and the solenoid (9a, 9b; 9c). The portion of the surface of the armature (7a; 7b) also directly faces the solenoid (9a, 9b; 9c) such that no envelope is situated in between the armature (7a; 7b) and the solenoid (9a, 9b; 9c). Further, the portion of the surface of the armature (7a; 7b) directly faces the solenoid (9a, 9b; 9c) such that no sheet is situated in between the armature (7a; 7b) and the solenoid (9a, 9b; 9c).

According to an aspect of the present disclosure, the valve member (5a; 5b) is or comprises a plug. In a specific embodiment, the valve member (5a; 5b) is or comprises a valve plug.

In an embodiment, the valve (1) comprises a valve seat (6) mounted to and/or being part of the second port (4). The valve member (5a; 5b) is advantageously configured to cooperate with the valve seat (6). In the closed position, the valve member (5a; 5b) seals the valve seat (6). In the open position, the valve member (5a; 5b) is removed from the valve seat (6).

In an embodiment, the valve (1) comprises a valve seat (6) mounted to and/or being part of the first port (3). The valve member (5a; 5b) is advantageously configured to cooperate with the valve seat (6). In the closed position, the valve member (5a; 5b) seals the valve seat (6). In the open position, the valve member (5a; 5b) is at a distance from the valve seat (6).

According to an aspect of the present disclosure, the valve member (5a) is or comprises a conical valve member. The valve seat (6) preferably is or comprises a funnel-shaped valve seat. It is also envisaged that the valve seat (6) is or comprises a V-shaped valve seat.

According to another aspect of the present disclosure, the valve member (5a) is or comprises a cylindrical valve member. The valve seat (6) preferably is or comprises a funnel-shaped valve seat. It is also envisaged that the valve seat (6) is or comprises a V-shaped valve seat.

In a special embodiment, the valve member (5a) comprises a conical portion and a cylindrical portion. The valve seat (6) preferably is or comprises a funnel-shaped valve seat. It is also envisaged that the valve seat (6) is or comprises a V-shaped valve seat.

It is envisaged that the valve member (5a; 5b) is situated in the fluid path between the first port (3) and the second port (4), the valve member (5a; 5b) being selectively and linearly moveable between a closed position, which closes the fluid path between the first port (3) and the second port (4), and an open position, which opens the fluid path between the first port (3) and the second port (4).

It is also envisaged that the valve member (5a; 5b) is situated in the fluid path between the first port (3) and the second port (4), the valve member (5a; 5b) being continuously moveable between a closed position, which closes the fluid path between the first port (3) and the second port (4), and an open position, which opens the fluid path between the first port (3) and the second port (4).

It is still envisaged that the valve member (5a; 5b) is situated in the fluid path between the first port (3) and the second port (4), the valve member (5a; 5b) being continuously and linearly moveable between a closed position, which closes the fluid path between the first port (3) and the second port (4), and an open position, which opens the fluid path between the first port (3) and the second port (4).

According to an aspect of the instant disclosure, the first port (3) is or comprises an inlet port. In an embodiment, the first port (3) is or comprises an inlet conduit.

According to an aspect of the instant disclosure, the second port (4) is or comprises an outlet port. In an embodiment, the second port (4) is or comprises an outlet conduit.

The valve (1) advantageously comprises a pair of leads (12) connected to the solenoid (9a, 9b; 9c). The pair of leads (12) ideally electrically and mechanically connects to the solenoid (9a, 9b; 9c). The pair of leads (12) is configured to supply an electric current to the solenoid (9a, 9b; 9c).

The pair of leads (12) is configured to supply an electric current to the solenoid (9a, 9b; 9c), the electric current producing a magnetic flux at the location of the armature (7a; 7b), the magnetic flux causing movement of the armature (7a; 7b). The magnetic flux preferably causes linear movement of the armature (7a; 7b).

The surface of the armature (7a; 7b) advantageously is or comprises a cylindrical surface. In a specific embodiment, the surface of the armature (7a) directly faces the solenoid (9a, 9b). In yet another specific embodiment, the entire surface of the armature (7a) directly faces the solenoid (9a, 9b). The surface of the armature (7a) directly faces the solenoid (9a, 9b) such that no can and no wall of a can is situated in between the armature (7a) and the solenoid (9a, 9b). The surface of the armature (7a) also directly faces the solenoid (9a, 9b) such that no envelope is situated in between the armature (7a) and the solenoid (9a, 9b). Further, the portion of the surface of the armature (7a) directly faces the solenoid (9a, 9b) such that no sheet is situated in between the armature (7a) and the solenoid (9a, 9b).

The instant disclosure still deals with any valve of the aforementioned valves (1), wherein all coils of the plurality of coils are insulated with polyamide-imide.

It is envisaged that all coils of the plurality of coils are covered with at least one of
- a film comprising polyamide-imide,
- a layer comprising polyamide-imide.

All coils of the plurality of coils preferably have a core made of at least one of
- copper,
- an alloy comprising copper.

The present disclosure also deals with any valve of the aforementioned valves (1), wherein the surface of the armature (7a) is an outer surface; and
wherein a portion of the outer surface of the armature (7a) directly faces the solenoid (9a, 9b).

The outer surface of the armature (7a) preferably envelopes the armature (7a). The outer surface of the armature (7a) advantageously is or comprises a cylindrical surface. In a specific embodiment, the outer surface of the armature (7a) directly faces the solenoid (9a, 9b). It is still envisaged that the entire outer surface of the armature (7a) directly faces the solenoid (9a, 9b). The outer surface of the armature (7a) directly faces the solenoid (9a, 9b) such that no can and no wall of a can is situated in between the armature (7a) and the solenoid (9a, 9b). The outer surface of the armature (7a) also directly faces the solenoid (9a, 9b) such that no envelope is situated in between the armature (7a) and the solenoid (9a, 9b). Further, the outer surface of the armature (7a) directly faces the solenoid (9a, 9b) such that no sheet is situated in between the armature (7a) and the solenoid (9a, 9b).

The instant disclosure also deals with any valve of the aforementioned valves (1), wherein the armature (7b) has a slot and a surface enveloping the slot; and
wherein the surface enveloping the slot directly faces the solenoid (9c) .

The instant disclosure also deals with any valve of the aforementioned valves (1), wherein the surface of the armature (7b) defines a slot in the armature (7b); and
wherein the slot receives the solenoid such that the surface envelopes and directly faces the solenoid (9c).

The instant disclosure also deals with any valve of the aforementioned valves (1), wherein the armature (7b) has an inner surface that defines a slot in the armature (7b); and
wherein the slot receives the solenoid such that the surface envelopes and directly faces the solenoid (9c).

The surface enveloping and/or defining the slot advantageously is or comprises a cylindrical surface.

The surface enveloping and/or defining the slot directly faces the solenoid (9c) such that no can and no wall of a can is situated in between the armature (7b) and the solenoid (9c). The surface enveloping and/or defining the slot also directly faces the solenoid (9c) such that no envelope is situated in between the armature (7b) and the solenoid (9c). Further, the surface enveloping and/or defining the slot directly faces the solenoid (9c) such that no sheet is situated in between the armature (7b) and the solenoid (9c).

A portion of the solenoid (9c) is advantageously received in and/or situated inside the slot of the armature (7b). According to a specific embodiment, the solenoid (9c) is situated inside the slot of the armature (7b). It is still envisaged that the solenoid (9c) is entirely situated inside the slot of the armature (7b). The surface enveloping and/or defining the slot of the armature (7b) advantageously is or comprises a cylindrical surface.

A connector such as a mechanical connector preferably connects the solenoid (9c) to the housing (2).

The instant disclosure also deals with any valve of the aforementioned valves (1), wherein the valve (1) comprises a housing (2); and
wherein the solenoid (9a, 9b; 9c), the armature (7a; 7b), and the valve member (5a; 5b) are situated inside the housing (2).

In an embodiment, the first port (3) perforates the (wall of the) housing (2). The housing (2) advantageously comprises the first port (3).

The second port (4) may also perforate the (wall of the) housing (2). The housing (2) advantageously comprises the second port (4).

The pair of leads (12) advantageously passes through the housing (2). A gasket may be arranged where the pair of leads (12) passes through the housing (2), the gasket thereby sealing the housing (2).

According to an aspect of the instant disclosure, a feed-through is arranged where the pair of leads (12) passes through the housing (2), the feed-through thereby sealing the housing (2). The feed-through advantageously hermetically seals the housing (2). The feed-through may be or comprise a glass feed-through. A glass feed-through confers advantages in terms of sealed connections at elevated pressures. The feed-through may also be or comprise an epoxy feed-through. The feed-through can further be or comprise a ceramics feed-through.

It is envisaged that the solenoid (9a, 9b; 9c) is rigidly mounted to the housing (2). In other words, the solenoid (9a, 9b; 9c) does not move relative to the housing (2).

It is also envisaged that the armature (7a; 7b) is moveably mounted to the housing (2).

According to an aspect of the present disclosure, the valve member (5b) is or comprises a cup-shaped valve member. The cup-shaped valve member (5b) preferably comprises a portion configured to envelope the valve seat (6). In an embodiment, the cup-shaped valve member (5b) comprises a cylindrical portion or a substantially cylindrical portion. The cylindrical or substantially cylindrical portion is configured to envelope the valve seat (6). In an embodiment, the valve seat (6) is a cylindrical or is a substantially cylindrical portion of the second port (4). The valve seat (6) is as such arranged inside the housing (2). In an alternate embodiment, the valve seat (6) is a cylindrical or is a substantially cylindrical portion of the first port (3). The valve seat (6) is as such arranged inside the housing (2).

The present disclosure also deals with any valve of the aforementioned valves (1) having a housing (2), wherein the housing (2) comprises a first chamber (10a);
wherein the solenoid (9a, 9b; 9c) is situated inside the first chamber (10a);
wherein the armature (7a; 7b) has a first portion;
wherein the first portion of the armature (7a; 7b) is situated inside the first chamber (10a).

In an embodiment, the armature (7a; 7b) is entirely situated inside the first chamber (10a).

In an embodiment, the solenoid (9a, 9b; 9c) is rigidly mounted to the first chamber (10a). In other words, the solenoid (9a, 9b; 9c) does not move relative to the first chamber (10a). The first chamber (10a) advantageously comprises an inner surface and the solenoid (9a, 9b; 9c) is rigidly mounted to the inner surface of the first chamber (10a).

The first chamber (10a) may comprise an outer wall and the pair of leads (12) passes through the outer wall of the first chamber (10a). A gasket may be arranged where the pair of leads (12) passes through the outer wall of the first chamber (10a), the gasket thereby sealing the first chamber (10a).

The present disclosure also deals with any valve of the aforementioned valves (1) having a first chamber (10a), wherein the first chamber (10a) comprises an inner surface;
wherein the valve (1) comprises a resilient member (11a - 11e);
wherein the resilient member (11a - 11e) mechanically connects to the inner surface of the first chamber (10a);
wherein the resilient member (11a - 11e) mechanically connects to the armature (7a; 7b); and
wherein the resilient member (11a - 11e) urges the armature (7a; 7b) and the valve member (5a; 5b) toward the closed position of the valve (1).

According to an aspect of the present disclosure, the resilient member (11a - 11e) is mounted to the inner wall of the first chamber (10a); and
the resilient member (11a - 11e) is mounted to the armature (7a; 7b).

In a related embodiment, the resilient member (11a - 11e) is secured relative to the inner wall of the first chamber (10a); and
the resilient member (11a - 11e) is secured relative to the armature (7a; 7b).

In an embodiment having a valve seat (6), the resilient member (11a - 11e) urges the armature (7a; 7b) and the valve member (5a; 5b) toward the valve seat (6).

In an embodiment having a stem (8) coupled to the armature (7a; 7b) and coupled to the valve member (5a; 5b), the resilient member (11a - 11e) urges the armature (7a; 7b), the stem (8), and the valve member (5a; 5b) toward the closed position of the valve (1).

In an embodiment having a valve seat (6) and a stem (8) coupled to the armature (7a; 7b) and coupled to the valve member (5a; 5b), the resilient member (11a - 11e) urges the armature (7a; 7b), the stem (8), and the valve member (5a; 5b) toward the valve seat (6).

According to an aspect of the instant disclosure, the resilient member (11b) comprises at least one disc spring or at least two disc springs or at least five disc springs. The resilient member (11b) may comprise a stack of disc springs (11b).

According to another aspect of the instant disclosure, the resilient member (11c) comprises a pair of permanent magnets. The pair of permanent magnets may, by way of non-limiting example, comprise a neodymium NdFeB magnet selected from at least one of a
sintered Nd₂Fe₁₄B magnet, or a
bonded Nd₂Fe₁₄B magnet.

In an alternate embodiment, the pair of permanent magnets comprises a samarium-cobalt SmCo magnet selected from at least one of a
sintered SmCo₅ magnet, or a
sintered Sm(Co, Fe, Cu, Zr)₇ magnet.

The present disclosure also deals with any valve of the aforementioned valves (1) having a first chamber (10a), wherein the first chamber (10a) is filled with the refrigerant; and
wherein the solenoid (9a, 9b; 9c) and the first portion of the armature (7a; 7b) are directly exposed to the refrigerant.

The refrigerant preferably is a fluid such as a liquid fluid. The refrigerant is ideally selected from at least one of a R-401A, R-404A, R-406A, R-407A, R-407C, R-408A, R-409A, R-410A, R-438A, R-500, R-502 refrigerant, ammonia, or a mixture thereof.

According to another aspect of the instant disclosure, the resilient member (11a - 11e) is also directly exposed to the refrigerant.

In an embodiment, the solenoid (9a, 9b; 9c) and the first portion of the armature (7a; 7b) are immersed in the refrigerant. It is also envisaged that the solenoid (9a, 9b; 9c) and the armature (7a; 7b) are immersed in the refrigerant. In a specific embodiment having a resilient member (11a - 11e), the solenoid (9a, 9b; 9c), the first portion of the armature (7a; 7b), and the resilient member (11a - 11e) are immersed in the refrigerant. It is also envisaged that the solenoid (9a, 9b; 9c), the armature (7a; 7b), and the resilient member (11a - 11e) are immersed in the refrigerant. In a specific embodiment having a resilient member (11a - 11e) and a pair of leads (12), wherein the pair of leads (12) comprises an inside portion situated inside the first chamber (10a), the solenoid (9a, 9b; 9c), the first portion of the armature (7a; 7b), the resilient member (11a - 11e), and the inside portion of the pair of leads (12) are immersed in the refrigerant. It is also envisaged that the solenoid (9a, 9b; 9c), the armature (7a; 7b), the resilient member (11a - 11e), and the inside portion of the pair of leads (12) are immersed in the refrigerant.

The instant disclosure also deals with any valve of the aforementioned valves (1) having a first chamber (10a) filled with a refrigerant, wherein the solenoid (9a, 9b; 9c) comprises a plurality of coils; and
wherein at least one coil of the plurality of coils is directly exposed to the refrigerant.

It is envisaged that at least one coil of the plurality of coils is directly exposed to the refrigerant. It is also envisaged that at least two coils of the plurality of coils are directly exposed to the refrigerant. It is still envisaged that the plurality of coils comprises more than four coils and that at least five coils of the plurality of coils are directly exposed to the refrigerant. It is further envisaged that the plurality of coils comprises more than five coils and that at least five coils of the plurality of coils are directly exposed to the refrigerant. It is further envisaged that all the coils of the plurality of coils are directly exposed to the refrigerant.

It is envisaged that at least one coil of the plurality of coils is immersed in the refrigerant. It is also envisaged that at least two coils of the plurality of coils are immersed in the refrigerant. It is still envisaged that the plurality of coils comprises more than four coils and that at least five coils of the plurality of coils are immersed in the refrigerant. It is further envisaged that the plurality of coils comprises more than five coils and that at least five coils of the plurality of coils are immersed in the refrigerant. It is further envisaged that all the coils of the plurality of coils are immersed in the refrigerant.

The present disclosure also deals with any valve of the aforementioned valves (1) having a first chamber (10a), wherein the housing (2) comprises a second chamber (10b);
wherein the valve member (5a; 5b) is situated inside the second chamber (10b);
wherein the second chamber (10b) comprises an outer wall; and
wherein the first port (3) and the second port (4) pass through the outer wall of the second chamber (10b).

It is envisaged that the armature (7a; 7b) comprises a second portion, the second portion of the armature (7a; 7b) being different from the first portion of the armature (7a; 7b); and that
the second portion of the armature (7a; 7b) is situated inside the second chamber (10b).

It is envisaged that the valve seat (6) is situated inside the second chamber (10b).

The first port (3) may perforate the (wall of the) second chamber (10b). The second chamber (10b) advantageously comprises the first port (3).

The second port (4) may also perforates the (wall of the) second chamber (10b). The second chamber (10b) advantageously comprises the second port (4).

The instant disclosure also deals with any valve of the aforementioned valves (1) having a first chamber (10a) and a second chamber (10b), wherein the valve (1) comprises a partition wall in between the first chamber (10a) and the second chamber (10b);
wherein the partition wall comprises an orifice (13) such that the first chamber (10a) is in fluid communication with the second chamber (10b) .

Where the valve (1) is in its open position, the first port (3) is in fluid communication with the first chamber (10a) via the second chamber (10b) and via the orifice (13).

Where the valve (1) is in its open position, the second port (4) is in fluid communication with the first chamber (10a) via the second chamber (10b) and via the orifice (13).

Where the valve (1) comprises a single valve seat (6) for cooperation with the valve member (5a; 5b) and where the first port (3) comprises the single valve seat (6), the second port (4) is always in fluid communication with the first chamber (10a) via the second chamber (10b) and via the orifice (13).

Where the valve (1) comprises a single valve seat (6) for cooperation with the valve member (5a; 5b) and where the second port (4) comprises the single valve seat (6), the first port (3) is always in fluid communication with the first chamber (10a) via the second chamber (10b) and via the orifice (13).

In an embodiment, the orifice (13) is a through-hole.

The orifice (13) may be different from an aperture, the aperture enabling linear movement the armature (7a; 7b) and/or of the stem (8) from the first chamber (10a) to the second chamber (10b) and vice versa.

The present disclosure also deals with any valve of the aforementioned valves (1), wherein the valve (1) comprises a guide member (14a - 14d);
wherein the guide member (14a - 14d) restricts movements of the armature (7a; 7b) to linear movements of the armature (7a; 7b).

In an embodiment having a valve seat (6), the guide member (14a - 14d) restricts movements of the armature (7a; 7b) to linear movements of the armature (7a; 7b); and
the guide member (14a - 14d) restricts movements of the armature (7a; 7b) to linear movements toward the valve seat (6) and/or away from the valve seat (6).

The guide member (14a - 14d) may also restrict movements of the valve member (5a; 5b) to linear movements of the valve member (5a; 5b).

In an embodiment having a stem (8) coupled to the armature (7a; 7b) and coupled to the valve member (5a; 5b), the guide member (14a - 14d) ideally further restricts movements of the stem (8) to linear movements of the stem (8).

It is envisaged that the guide member (14a, 14b) is or comprises a sleeve. It is also envisaged that the housing (2) comprises a pair of sidewalls and that the guide member (14c, 14d) is or comprises the pair of sidewalls.

The instant disclosure also deals with any valve of the aforementioned valves (1) having a guide member (14a, 14b) and a partition wall, wherein the guide member (14a, 14b) comprises a sleeve mounted to the partition wall; and
wherein the guide member (14a, 14b) forms a slide bearing.

The guide member (14a, 14b) is advantageously different from the housing (2).

In an embodiment, the guide member (14a, 14b) forms a friction bearing.

The instant disclosure still deals with any valve of the aforementioned valves (1), wherein the armature (7a; 7b) mechanically connects to the valve member (5a; 5b); and
wherein a linear movement of the armature (7a; 7b) causes a linear movement of the valve member (5a; 5b).

Preferably, a linear movement of the valve member (5a; 5b) causes a linear movement of the armature (7a; 7b).

It is envisaged that the armature (7a; 7b) mechanically connects to a stem (8). The stem (8) then mechanically connects to the valve member (5a; 5b). Accordingly, a linear movement of the armature (7a; 7b) causes a linear movement of the stem (8). A linear movement of the stem (8) then causes a linear movement of the valve member (5a; 5b). Also, a linear movement of the valve member (5a; 5b) causes a linear movement of the stem (8). A linear movement of the stem (8) then causes a linear movement of the armature (7a; 7b).

The instant disclosure further discloses any valve of the aforementioned valves (1), wherein the armature (7a; 7b) and the valve member (5a; 5b) are arranged along a straight line.

In an embodiment having a stem (8), the armature (7a; 7b), the stem (8), and the valve member (5a; 5b) are arranged along a straight line. In an embodiment having a stem (8) and a valve seat (6), the armature (7a; 7b), the stem (8), the valve member (5a; 5b), and the valve seat (6) are arranged along one straight line.

In a related embodiment having a stem (8), the centre of the armature (7a; 7b), the centre of the stem (8), and the centre of the valve member (5a; 5b) are arranged along a straight line. In an embodiment having a stem (8) and a valve seat (6), the centre of the armature (7a; 7b), the centre of the stem (8), the centre of the valve member (5a; 5b), and the centre of the valve seat (6) are arranged along one straight line.

In another related embodiment having a stem (8), the centre of mass of the armature (7a; 7b), the centre of mass of the stem (8), and the centre of mass of the valve member (5a; 5b) are arranged along one straight line. In an embodiment having a stem (8) and a valve seat (6), the centre of mass of the armature (7a; 7b), the centre of mass of the stem (8), the centre of mass of the valve member (5a; 5b), and the centre of mass of the valve seat (6) are arranged along one straight line.

The instant disclosure also deals with any valve of the aforementioned valves (1) having a second chamber (10) and a housing (2), wherein the valve (1) comprises a third port;
wherein the third port perforates the (wall of the) second chamber (10b); and
wherein the third port perforates the (wall of the) housing (2).

According to an aspect of the instant disclosure, the third port is or comprises an inlet port. In an embodiment, the third port is or comprises an inlet conduit.

According to an aspect of the instant disclosure, the third port is or comprises an outlet port. In an embodiment, the third port is or comprises an outlet conduit.

It should be understood that the foregoing relates only to certain embodiments of the disclosure and that numerous changes may be made therein without departing from the scope of the disclosure as defined by the following claims. It should also be understood that the disclosure is not restricted to the illustrated embodiments and that various modifications may be made within the scope of the following claims.

### Reference numerals

1 valve
2 housing
3 first port
4 second port
5a, 5b valve member
6 valve seat
7a; 7b armature
8 stem
9a, 9b; 9c solenoid
10a first chamber
10b second chamber
11a; 11b, 11c resilient member
12 pair of leads
13 orifice, through-hole
14a, 14b; 14c, 14d guide member

## Claims

1. A valve (1) comprising:
a first port (3), a second port (4), and a fluid path extending between the first port (3) and the second port (4);
a valve member (5a; 5b) situated in the fluid path between the first port (3) and the second port (4), the valve member (5a; 5b) being selectively moveable between a closed position, which closes the fluid path between the first port (3) and the second port (4), and an open position, which opens the fluid path such that a refrigerant can flow between the first port (3) and the second port (4);
an armature (7a; 7b) coupled to the valve member (5a; 5b) and having a surface and a solenoid (9a, 9b; 9c);
wherein a portion of the surface of the armature (7a; 7b) directly faces the solenoid (9a, 9b; 9c);
wherein the solenoid (9a, 9b; 9c) comprises a plurality of coils; and
wherein at least one coil of the plurality of coils is directly exposed to the refrigerant and is insulated with polyamide-imide.

2. The valve (1) according to claim 1, wherein all coils of the plurality of coils are insulated with polyamide-imide.

3. The valve (1) according to any of the claims 1 to 2, wherein the surface of the armature (7a) is an outer surface; and
wherein a portion of the outer surface of the armature (7a) directly faces the solenoid (9a, 9b).

4. The valve (1) according to any of the claims 1 to 2, wherein the surface of the armature (7b) defines a slot in the armature (7b); and
wherein the slot receives the solenoid such that the surface envelopes and directly faces the solenoid (9c).

5. The valve (1) according to any of the claims 1 to 4, wherein the valve (1) comprises a housing (2); and
wherein the solenoid (9a, 9b; 9c), the armature (7a; 7b), and the valve member (5a; 5b) are situated inside the housing (2).

6. The valve (1) according to claim 5, wherein the housing (2) comprises a first chamber (10a);
wherein the solenoid (9a, 9b; 9c) is situated inside the first chamber (10a);
wherein the armature (7a; 7b) has a first portion;
wherein the first portion of the armature (7a; 7b) is situated inside the first chamber (10a).

7. The valve (1) according to claim 6, wherein the first chamber (10a) comprises an inner surface;
wherein the valve (1) comprises a resilient member (11a - 11e);
wherein the resilient member (11a - 11e) mechanically connects to the inner surface of the first chamber (10a);
wherein the resilient member (11a - 11e) mechanically connects to the armature (7a; 7b); and
wherein the resilient member (11a - 11e) urges the armature (7a; 7b) and the valve member (5a; 5b) toward the closed position of the valve (1).

8. The valve (1) according to any of the claims 6 to 7, wherein the first chamber (10a) is filled with the refrigerant; and
wherein the solenoid (9a, 9b; 9c) and the first portion of the armature (7a; 7b) are directly exposed to the refrigerant.

9. The valve (1) according to any of the claims 5 to 8, wherein the housing (2) comprises a second chamber (10b);
wherein the valve member (5a; 5b) is situated inside the second chamber (10b);
wherein the second chamber (10b) comprises an outer wall; and
wherein the first port (3) and the second port (4) pass through the outer wall of the second chamber (10b).

10. The valve (1) according to the claims 5 and 9, wherein the valve (1) comprises a partition wall in between the first chamber (10a) and the second chamber (10b);
wherein the partition wall comprises an orifice (13) such that the first chamber (10a) is in fluid communication with the second chamber (10b).

11. The valve (1) according to any of the claims 1 to 10, wherein the valve (1) comprises a guide member (14a - 14d);
wherein the guide member (14a - 14d) restricts movements of the armature (7a; 7b) to linear movements of the armature (7a; 7b).

12. The valve (1) according to the claims 10 and 11, wherein the guide member (14a, 14b) comprises a sleeve mounted to the partition wall; and
wherein the guide member (14a, 14b) forms a slide bearing.

13. The valve (1) according to any of the claims 1 to 12, wherein the armature (7a; 7b) mechanically connects to the valve member (5a; 5b); and
wherein a linear movement of the armature (7a; 7b) causes a linear movement of the valve member (5a; 5b).

14. The valve (1) according to any of the claims 1 to 13, wherein the armature (7a; 7b) and the valve member (5a; 5b) are arranged along one straight line.

15. The valve (1) according to any of the claims 9 to 10, wherein the valve (1) comprises a third port;
wherein the third port perforates the second chamber (10b); and
wherein the third port perforates the housing (2).
